# EUROPEAN PATENT APPLICATION

(11) **EP 2 592 469 A1**
(43) Date of publication of application: **15.05.2013**
(21) Application number: 12189343.2
(22) Date of filing: 19.10.2012
(51) Int. Cl.: G02F 1/13357, G02B 6/00

(54) **Liquid crystal panel assembly and image display apparatus having the same**

(30) Priority: 09.11.2011 KR 20110116360
(71) Applicant: Samsung Electronics Co., Ltd, Gyeonggi-do 443-742 (KR)
(72) Inventor: Cho, Byoung-jin, Gyeonggi-do (KR); Lee, Young-chol, Gyeonggi-do (KR); Lee, Sang-eun, Seoul (KR); Jung, Myung-ryul, Gyeonggi-do (KR); Choi, Hyeong-sik, Gyeonggi-do (KR)
(74) Representative: Walaski, Jan Filip

(57) **Abstract**

A liquid crystal panel assembly (100) is provided, which includes a liquid crystal panel (140) displaying an image, a light source unit (150) arranged on a side of the liquid crystal panel, an optical sheet unit (145) arranged in the rear of the liquid crystal panel, a reflection sheet (170) arranged to be spaced apart from the optical sheet unit, a light scattering unit (160) arranged adjacent to the light source unit, where the light scattering unit scatters light such that at least some of the light emitted from the light source unit is incident toward the reflection sheet, and a pattern member (180) arranged on the reflection sheet, the pattern member including a pattern of repeating optical shapes.

## Description

The invention relates to a liquid crystal panel assembly and an image display apparatus having the same, and more particularly to a liquid crystal panel assembly without a light guide panel (LGP) and an image display apparatus having such liquid crystal panel assembly.

A liquid crystal display apparatus that is one type of image display apparatus is an apparatus that implements an image using liquid crystals and is applied to various kinds of display devices such as televisions and computer monitors.

Such a liquid crystal display apparatus includes a liquid crystal panel assembly, and the liquid crystal panel assembly includes a light source unit and a liquid crystal panel. The light source unit is arranged in the rear or on a side of the liquid crystal panel. In the case where the light source unit is arranged on the side of the liquid crystal panel (also known as a side backlight), a light guide panel (LGP) is typically provided in the rear of the liquid crystal panel so that the liquid crystal panel uniformly provides light generated from the light source unit over the whole region of the liquid crystal panel.

Recently, to save costs and make a lighter weight device, a liquid crystal panel assembly with no LGP, which is called an LGP-less liquid crystal panel assembly, has been developed. In the case of the LGP-less liquid crystal panel assembly, a light scattering unit, such as an optical lens or a reflection mirror, is arranged around the light source unit so that the light can be uniformly spread over a reflection sheet that is arranged in the rear of the liquid crystal panel.

An image that is provided by such an LGP-less liquid crystal panel assembly in a region that is adjacent to the light source unit may appear much brighter than an image in other regions. This phenomenon may entirely deteriorate the uniformity of luminance to cause the deterioration of picture quality.

One or more exemplary embodiments may address at least the above problems and/or disadvantages and provide at least the advantages described below. Accordingly, one or more exemplary embodiments may provide a liquid crystal panel assembly and an image display apparatus having the same, which can improve the luminance uniformity of an image.

According to an aspect of an exemplary embodiment an LGP-less liquid crystal panel assembly is provided which includes a liquid crystal panel which displays an image; a light source unit disposed at a side of the liquid crystal panel; an optical sheet unit disposed at a rear of the liquid crystal panel; a reflection sheet disposed at a rear of the optical sheet unit and spaced from the optical sheet unit; a light scattering unit disposed adjacent to the light source unit, wherein the light scattering unit scatters light such that at least some of the light emitted form the light source unit is incident toward the reflection sheet; and a pattern member disposed on a front of the reflection sheet, the pattern member comprising a patter of repeating optical shapes.

The optical shapes of the pattern member each extend along a length direction of the liquid crystal panel assembly and are repeatedly arranged along a width direction of the liquid crystal panel assembly.

Each of the optical shapes may have a triangular cross section.

Each of the optical shapes may have a cross section in a half convex lens shape.

The pattern member may include a base portion which overlaps the reflection sheet, and the optical shapes may project from the base portion.

The pattern member may be transparent.

The pattern member may be made of polycarbonate or polymethyl methacrylate.

The pattern member and the reflection sheet may be bonded together.

The light scattering unit may include at least one reflection mirror surrounding the light source unit.

The light scattering unit may include an upper reflection mirror arranged on an upper side of the light source unit and a lower reflection mirror arranged on a lower side of the light source.

The liquid crystal panel assembly may further include an upper chassis and a lower chassis which accommodate therebetween the liquid crystal panel, the light source unit, the reflection sheet, and the light scattering unit, wherein the reflection sheet is supported by the lower chassis.

The optical sheet unit may include a prism sheet.

The light source unit may include a plurality of LED light sources.

According to an aspect of another exemplary embodiment an image display apparatus is provided including the above-described liquid crystal panel assembly.

The above and other exemplary aspects, features and advantages will be more apparent from the following detailed description when taken in conjunction with the accompanying drawings, in which:
FIG. 1 is a partial cross-sectional view illustrating a liquid crystal panel assembly according to an exemplary embodiment of the present disclosure;
FIG. 2 is a photograph showing an example of a typical liquid crystal panel assembly in which an edge region of an image has high luminance;
FIG. 3 is a partial cross-sectional view of a pattern member provided in the liquid crystal panel assembly of FIG. 1;
FIG. 4 is a partial cross-sectional view illustrating an alternative embodiment of the pattern member illustrated in FIG. 3; and
FIG. 5 is a cross-sectional view schematically illustrating an example of an image display apparatus according to an exemplary embodiment of the present disclosure.

Hereinafter, exemplary embodiments are described in detail with reference to the accompanying drawings.

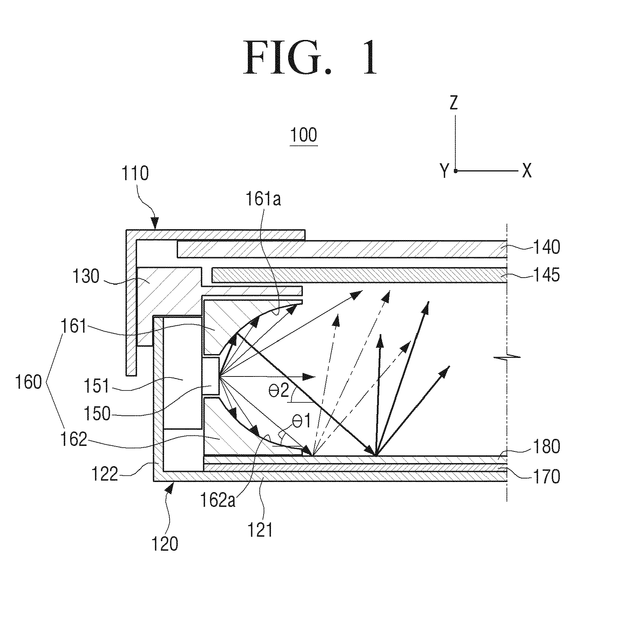

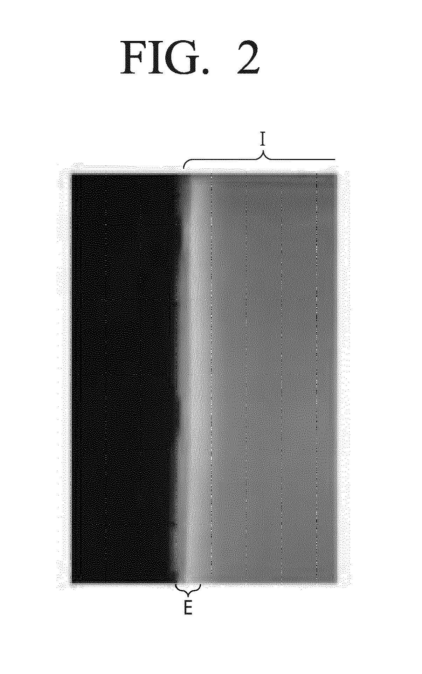

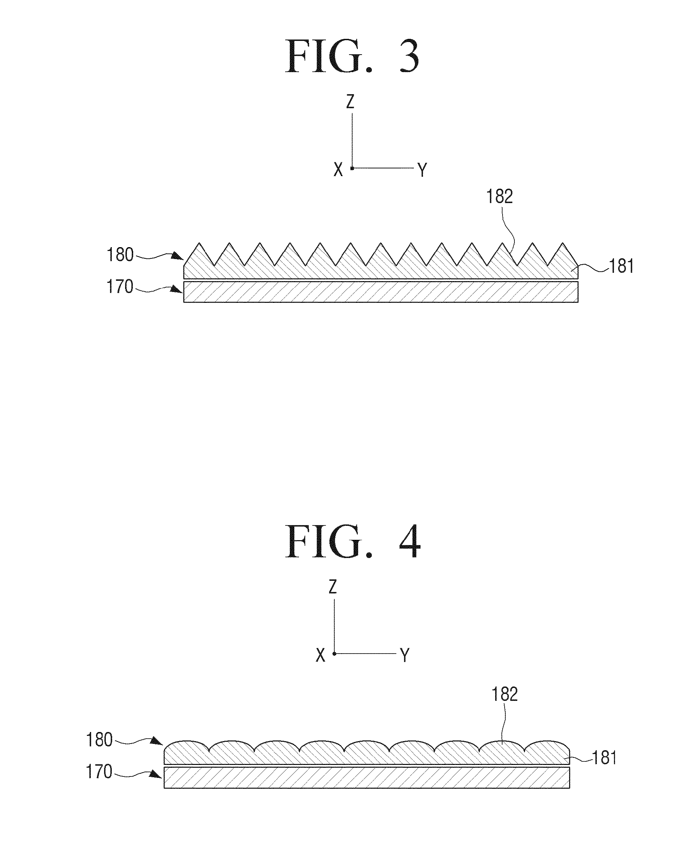

FIG. 1 is a partial cross-sectional view illustrating a liquid crystal panel assembly according to an exemplary embodiment of the present disclosure. FIG. 2 is a photograph showing an example of a typical liquid crystal panel assembly in which an edge region of an image has high luminance. FIG. 3 is a partial cross-sectional view of a pattern member provided in the liquid crystal panel assembly of FIG. 1, and FIG. 4 is a partial cross-sectional view illustrating an alternative embodiment of the pattern member illustrated in FIG. 3.

Referring to FIG. 1, a liquid crystal panel assembly 100 according to an exemplary embodiment of the present disclosure includes an upper chassis 110, a lower chassis 120, and an intermediate chassis 130.

The upper chassis 110 and the lower chassis 120 are coupled to each other by a fastening member such as a screw (not illustrated), and form a space that accommodates components in the liquid crystal panel assembly 100. The lower chassis 120 includes a bottom portion 121 and a side portion 122 which are perpendicular to each other. The intermediate chassis 120 is also called a middle mold, and supports the internal components of the liquid crystal panel assembly 100 together with the upper and lower chasses 110 and 120. For this, the intermediate chassis 130 is arranged at an edge region of the liquid crystal panel assembly 100, and arranged between the upper chassis 110 and the lower chassis 120.

Referring to FIG. 1, the liquid crystal panel assembly 100 includes a liquid crystal panel 140, an optical sheet unit 145, a light source unit 150, a light scattering unit 160, a reflection sheet 170, and a pattern member 180.

The liquid crystal panel 140 displays a colour image using light provided from the light source unit 150. The liquid crystal panel 140 includes a colour filter substrate (not illustrated) having a colour filter layer and a thin film transistor substrate (not illustrated) having thin film transistors, and liquid crystals (not illustrated) are accommodated between the colour filter substrate and the thin film transistor substrate. Since the liquid crystal panel 140 is well known in the art, the detailed description thereof will be omitted.

The optical sheet unit 145 is arranged in parallel to the liquid crystal panel 140 in the rear of the liquid crystal panel 140. Although the optical sheet unit 145 is illustrated as if it is a single member in FIG. 1, it may include a plurality of optical sheets such as a diffusion sheet, a prism sheet, and the like.

The light source unit 150 is arranged at an edge region of the liquid crystal panel assembly 100. Although the light source unit 150 is shown as if it is a single member in FIG. 1, it may include a plurality of light sources arranged in a width direction (that is, a Y direction) of the liquid crystal panel assembly 100. These light sources are mounted on a driving substrate 151, and this driving substrate 151 is fixed to a side portion 122 of the lower chassis 120. In this embodiment, the light sources are LEDs, and in another alternative embodiment, another type of light sources may be adopted.

The light scattering unit 160 is arranged adjacent to the light source unit 150, and widely spreads the light generated from the light source unit 150 onto the reflection sheet 170. That is, the light irradiated by the light source unit 150 may be guided toward the reflection sheet 170 by the optical scattering unit 160. As described above, the light scattering unit 160 serves to widely disperse or direct the light over the whole region of the reflection sheet 170, and thus it may be called a "directing unit".

The light scattering unit 160 may include at least one reflection mirror that surrounds the light source unit 150. In this embodiment, the light scattering unit 160 includes a pair of reflection mirrors, that is, an upper reflection mirror 161 and a lower reflection mirror 162. An upper reflection surface 161a, which is a curved surface, is provided inside the upper reflection mirror 161, and a lower reflection surface 162a, which is symmetrical with the upper reflection surface 161a, is provided inside the lower reflection mirror 162. Here, the upper reflection surface 161a and the lower reflection surface 162a are designed to be in a curved shape to uniformly spread the light from the respective light source units 150 onto the reflection sheet 170. The reflection mirror may be a concave mirror to reflect and direct the light from the respective light source units 150 onto the reflection sheet 170 such that the light is evenly distributed on the reflection sheet 170.

As illustrated in FIG. 1, the liquid crystal panel assembly 100 is provided with no light guide panel, and the function of such a light guide panel may be replaced by the light scattering unit 160. Since the liquid crystal panel assembly 100 is provided with no light guide panel in this embodiment, the cost saving and light weight can be achieved.

Although the light scattering unit 160 includes reflection mirrors surrounding the light source unit 150 in this embodiment, the light scattering unit 160 may alternately include an optical lens that is arranged in front of the optical unit 150 to refract the light from the light source unit 150 at various angles.

The reflection sheet 170 is a rectangular sheet that is arranged on a bottom portion 121 of the lower chassis 120 to face the optical sheet unit 145. The reflection sheet 170 is extended along the length direction (X direction) and the width direction (Y direction) of the liquid crystal panel assembly 100. That is, the reflection sheet 170 is extended along the X-Y plane in FIG. 1.

The reflection sheet 170 reflects the light generated from the light source unit 150 toward the optical sheet unit 145. That is, the light irradiated by the light source unit 150 reaches the reflection sheet 170 directly or through the light scattering unit 160, and the light that has reached the reflection sheet 170 is reflected by the reflection sheet 170 toward the optical sheet unit 145.

The reflection sheet 170 is made of polyethylene terephthalate (PET). However, in another alternative embodiment, the reflection sheet 170 may be made of silver. Silver is relatively expensive, and thus the reflection sheet 170 may be made of PET.

As can be seen from FIG. 1, an incident angle θ1 of the light that is incident from the light source unit 150 onto the reflection sheet 170 and an incident angle θ2 of the light that is incident from the optical scattering unit 160 onto the reflection sheet 170 become greater in a region that is nearer to the light source unit 150. That is, the incident angles θ1 and θ2 become greatest at an edge region (that is, regions adjacent to the light source) of the reflection sheet 170.

As the incident angle of the light is larger, the reflection angle of the light also becomes larger. Accordingly, the incident angle of the light, which is reflected from the edge region of the reflection sheet 170 and is incident to the edge region of the optical sheet unit 145, also becomes larger. As described above, the optical sheet unit 145 includes a prism sheet. This prism sheet has the characteristics that it transmits light having an incident angle that is larger than a reference angle and fully reflects light having an incident angle that is smaller than the reference angle. Accordingly, the light that is incident from the reflection sheet 170 to the edge region of the optical sheet unit 145 has a large incident angle, and thus a considerable portion of the light penetrates toward the liquid crystal panel 140. Accordingly, a larger amount of light can be provided in a region adjacent to the light source unit 150 of the liquid crystal panel in comparison to other regions.

In this case, an image which is generated by the liquid crystal panel assembly 100 in a region that is adjacent to the light source unit 150 may appear much brighter than an image in other regions. FIG. 2 shows an example of a typical LGP-less liquid crystal panel assembly having such problems. In FIG. 2, an edge region E of an image I appears much brighter than the remaining region. This phenomenon may deteriorate the uniformity of luminance to cause the deterioration of picture quality.

The above-described problems may be solved by increasing an optical distance between the light source unit 150 and the reflection sheet 170 through designing the reflection sheet 170 with a larger thickness. However, this scheme goes against the slim design of the liquid crystal panel assembly 100, and thus it is difficult to adopt this scheme in the liquid crystal panel assembly 100.

The pattern member 180 is provided to solve the above-described problems of luminance uniformity deterioration. Referring to FIG. 1, the pattern member 180 is arranged on the reflection sheet 170, and is substantially in a rectangular sheet shape. In the same manner as the reflection sheet 170, the pattern member 180 is extended along the length direction (X direction) or the width direction (Y direction) of the liquid crystal panel assembly 100. That is, the reflection sheet 180 is extended along the X-Y plane in FIG. 1.

The pattern member 180 has a transparent material. In this embodiment, the pattern member 180 is made of polycarbonate or polymethyl methacrylate (PMMA).

Referring to FIG. 3, the pattern member 180 includes a base portion 181 and a plurality of patterns 182.

The base portion 181 is arranged to overlap the reflection sheet 170. The base portion 181 may be seated on the reflection sheet 170 without adhesives or may be attached to the reflection sheet 170 by adhesives.

Patterns 182 having the same shape are repeatedly formed along the width direction (Y direction). The respective patterns 182 project from the base portion 181, and are uniformly extended along the length direction (X direction) of the liquid crystal panel assembly 100.

As illustrated, as seen from the X direction, each pattern 182 may have a triangular cross section. That is, the cross section of the pattern 182 in the Y-Z plane is a triangle. However, the shape of the pattern 182 is not limited thereto, and may have other cross-sectional shapes. For example, the pattern 182 may have other polygonal cross sections, such as a quadrangle, a pentagon, a hexagon, and the like, or may have a cross section of a curved surface. An example of the pattern member 180 having patterns 182 with a cross section of a curved surface is illustrated in FIG. 4. As illustrated in FIG. 4, each pattern 182 may have a cross section in a convex lens shape.

The light that propagates from the light source unit 150 or the light scattering unit 160 to the reflection sheet 170 first reaches the pattern member 180, and the pattern member 180 serves to transmit a portion of the light toward the reflection sheet 170 and to reflect the remaining portion of the light. That is, the pattern member 180 performs a similar function to a prism.

The light that is irradiated from the light source unit 150, through the use of the pattern member 180, can propagate more uniformly toward the reflection sheet 170. In other words, the pattern member 180 is arranged to disperse the light from the light source unit 150 and the light scattering unit 160, and as such, the light from the light source unit 150 is evenly distributed on the reflection sheet 170. Further, since the light is refracted by the patterns 182 of the pattern member 180 before reaching the reflection sheet 170, the incident angles θ1 and θ2 (see FIG. 1) of the light that is incident to the region of the reflection sheet 180 adjacent to the light source unit 150 may be reduced.

As a result, a phenomenon that an image appears excessively bright in the edge region (that is, regions adjacent to the light source) of the liquid crystal panel assembly 100 can be prevented. That is, the problems of luminance uniformity deterioration as shown in FIG. 2 can be solved.

Further, since the pattern member 180 is in a sheet shape having a thin thickness, the whole thickness of the liquid crystal panel assembly 100 is not significantly increased. Accordingly, the scheme for improving the luminance uniformity through the pattern member 180 is in accordance with the slim design of the liquid crystal panel assembly 100.

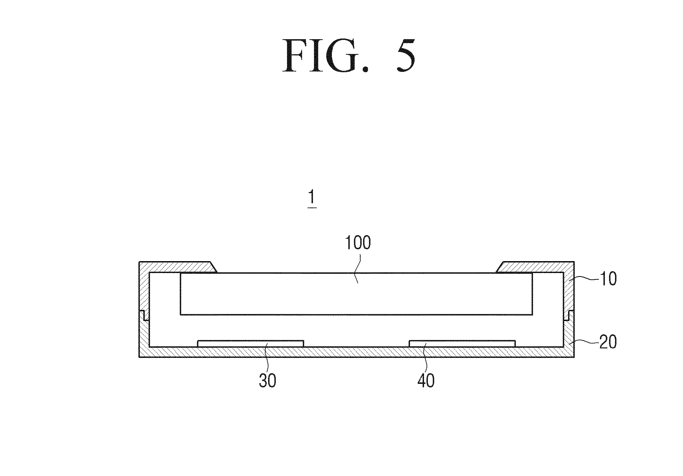

FIG. 5 is a cross-sectional view schematically illustrating an image display apparatus according to an exemplary embodiment of the present disclosure.

The image display apparatus 1 of FIG. 5 exemplifies a liquid crystal display television (LCD TV). However, it will be apparent to those of skilled in the art that the present disclosure can be adopted in other types of display apparatuses such as a computer monitor.

The image display apparatus 1 includes an upper housing 10 and a lower housing 20. These housings 10 and 20 accommodate the liquid crystal panel assembly 100, according to the above-described embodiments, therein. As described above, the light source unit 150 of the liquid crystal panel assembly 100 includes a plurality of LED light sources. From this viewpoint, the image display apparatus 1 of FIG. 5 may be called an LED TV.

In the rear of the liquid crystal panel assembly 100, a power board 30 supplying the power to the image display apparatus 1 and a control board 40 controlling the operation of the liquid crystal display apparatus 1 are arranged. Although the power board 30 and the control board 40 are simply illustrated in FIG. 5, other circuit boards can be additionally provided in the image display apparatus 1.

As described above, the pattern member 180 for improving the luminance uniformity is provided in the liquid crystal panel assembly 100, and thus the image display apparatus 1 of FIG. 5 that is provided with the liquid crystal panel assembly 100 can provide an image with improved luminance uniformity.

While the present disclosure has been shown and described with reference to exemplary embodiments thereof, it will be understood by those skilled in the art that various changes in form and detail may be made therein without departing from the scope of the present invention, as defined by the appended claims.

## Claims

1. A liquid crystal panel assembly comprising:
a liquid crystal panel which displays an image;
a light source unit disposed at a side of the liquid crystal panel;
an optical sheet unit disposed at a rear of the liquid crystal panel;
a reflection sheet disposed at a rear of the optical sheet unit and spaced from the optical sheet unit;
a light scattering unit disposed adjacent to the light source unit, and arranged to scatter light such that at least some of the light emitted from the light source unit is incident toward the reflection sheet; and
a pattern member disposed on a front of the reflection sheet, the pattern member comprising a pattern of repeating optical shapes.

2. The liquid crystal panel assembly as claimed in claim 1, wherein the optical shapes of the pattern member each extend along a length direction of the liquid crystal panel assembly and are repeatedly arranged along a width direction of the liquid crystal panel assembly.

3. The liquid crystal panel assembly as claimed in claim 1 or 2, wherein each of the optical shapes has a triangular cross section.

4. The liquid crystal panel assembly as claimed in claim 1 or 2, wherein each of the optical shapes has a cross section of a convex lens shape.

5. The liquid crystal panel assembly as claimed in any one of the preceding claims, wherein the pattern member comprises a base portion which overlaps the reflection sheet, and the optical shapes project from the base portion.

6. The liquid crystal panel assembly as claimed in any one of the preceding claims, wherein the pattern member is transparent.

7. The liquid crystal panel assembly as claimed in claim 6, wherein the pattern member is made of polycarbonate or polymethyl methacrylate.

8. The liquid crystal panel assembly as claimed in any one of the preceding claims, wherein the pattern member and the reflection sheet are bonded together.

9. The liquid crystal panel assembly as claimed in any one of the preceding claims, wherein the light scattering unit comprises at least one reflection mirror surrounding the light source unit.

10. The liquid crystal panel assembly as claimed in claim 9, wherein the light scattering unit comprises an upper reflection mirror disposed on an upper side of the light source unit and a lower reflection mirror disposed on a lower side of the light source unit.

11. The liquid crystal panel assembly as claimed in any one of the preceding claims, further comprising an upper chassis and a lower chassis which accommodate therebetween the liquid crystal panel, the light source unit, the reflection sheet, and the light scattering unit, wherein the reflection sheet is supported by the lower chassis.

12. The liquid crystal panel assembly as claimed in any one of the preceding claims, wherein the optical sheet unit comprises a prism sheet.

13. The liquid crystal panel assembly as claimed in any one of the preceding claims, wherein the light source unit comprises a plurality of light emitting diodes.

14. An image display apparatus comprising a liquid crystal panel assembly according to any one of claims 1 to 13.

15. The image display apparatus as claimed in claim 14, wherein the image display apparatus is a television.
